**Europäisches Patentamt**

**European Patent Office**

**Office européen des brevets**

(19)

(11) Veröffentlichungsnummer: **0 209 483**
**B1**

(12)

# EUROPÄISCHE PATENTSCHRIFT

(45) Veröffentlichungstag der Patentschrift: **27.12.90**

(51) Int. Cl.⁵: **H 04 N 7/13,** H 04 J 3/07

(21) Anmeldenummer: **86730089.9**

(22) Anmeldetag: **23.05.86**

(54) **Bewegtbildkodierer mit Selbstkennzeichnung der Stopfzeichen.**

(30) Priorität: **15.07.85 DE 3525567**

(43) Veröffentlichungstag der Anmeldung:
**21.01.87 Patentblatt 87/04**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**DE-A-3 101 536**
**DE-A-3 230 943**
**GB-A-1 593 848**

(73) Patentinhaber: **KRONE Aktiengesellschaft**
**Beeskowdamm 3-11**
**D-1000 Berlin 37 (DE)**

(72) Erfinder: **Kliem, Helmut, Dr.**
**Stölpchenweg 12c**
**D-1000 Berlin 39 (DE)**

Courier Press, Leamington Spa, England.

## Beschriebung

Die Erfindung bezieht sich auf ein Verfahren zur Taktanpassung der äquidistanten digitalen Wertefolge eines Quellensignals an den Takt einer digitalen Übertragungsstrecke und auf eine Vorrichtung zur Durchführung des Verfahrens.

Ein Verfahren der gattungsgemäßen Art ist aus der DE—A—29 25 391 vorbekannt. Hierbei sind die Quellensignale digitale Abtastsignale mit niedriger Frequenz. Im normalen Wertevorrat steht kein spezielles Codewort zur Verfügung. Folglich muß der Coderaum durch ein Zusatzbit vergrößert werden, um Codeworte für die Stopfzeichen zur Verfügung zu haben.

Bei der Bildübertragung mittels vorgegebener Zeitmultiplexkanäle ist die Kapazität für ein Zusatzbit jedoch nicht vorhanden.

Der Erfindung liegt von daher die Aufgabe zugrunde, eine Verfahren der gattungsgemäßen Art zu schaffen, bei welchem keine zusätzliche Kanalkapazität für ein Zusatzbit zur Kennzeichnung der Stopfzeichen erforderlich ist.

Die Lösung dieser Aufgabe ergibt sich aus den kennzeichnenden Merkmalen des Anspruches 1. Hierbei wird die äquidistante, digitale Wertefolge in an sich bekannter Weise durch orthogonale Abtastung eines FBAS-Bewegtbildsignales gewonnen. Erfindungsgemäß wird jedoch das das Stopfzeichen kennzeichnende Codewort durch Modifikation der Bildabtastwerte der angebotenen Bildzeichen gewonnen. Eine zusätzliche Kanalkapazität für ein Zusatzbit zur Kennzeichnung des Stopfzeichens ist somit nicht erforderlich.

Die Erfindung kennzeichnet sich durch ein Verfahren für die Übertragung von Bild-Abtastwerten, die synchron zur Zeilenfrequenz des Bildes sind, d.h. die eine feststehende Orthogonalität des Bildpunktmusters ergeben, die nicht synchron zum Übertragungstakt sind und die durch Zeichen-Taktanpassung von der Zeilenfrequenz an den Übertragungstakt angepaßt werden.

Eine erfindungsgemäß Ausführungsform einer Vorrichtung zur Durchführung des Verfahrens ergibt sich aus den Merkmalen der Ansprüche 2 und 3.

Es ist zwar bereits aus dem SMPTE Journal, Volume 85, März 1976, S.141—145, die geschlossene, digitale Codierung von FBAS-Signalen bekannt. Hier wird jedoch das erfindungsgemäße Merkmal nicht verwirklicht, daß das Stopfzeichen kennzeichnende Codewort durch Modifikation der Bildabtastwerte der angebotenen Bildzeichen gewonnen wird.

Es ist ferner aus IEEE Transactions on Communications, Volume COM-20, Nr. 3, Juni 1972, Seiten 275—281, die Übertragung von nicht orthogonal abgetasteten Signalen bekannt. Hierbei werden jedoch weder eine Zeichentaktanpassung noch das Problem der Quellentaktanpassung von orthogonal abgetasteten Signalen beschrieben.

Das erfindungsgemäße Verfahren wird nachfolgend anhand einer in den Zeichnungen dargestellten erfindungsgemäßen Vorrichtung näher erläutert. Es zeigen:

Fig. 1 ein Blockschaltbild der Vorrichtung,

Fig. 2 das Blockschaltbild des Sendeteiles der Vorrichtung,

Fig. 3 das Blockschaltbild des Empfangsteiles der Vorrichtung,

Fig. 4 den Stopfprozessorteil im Sender der Vorrichtung in einer alternativen Ausführungsform und

Fig. 5 den Stopfprozessorteil im Empfänger der Vorrichtung in einer alternativen Ausführungsform.

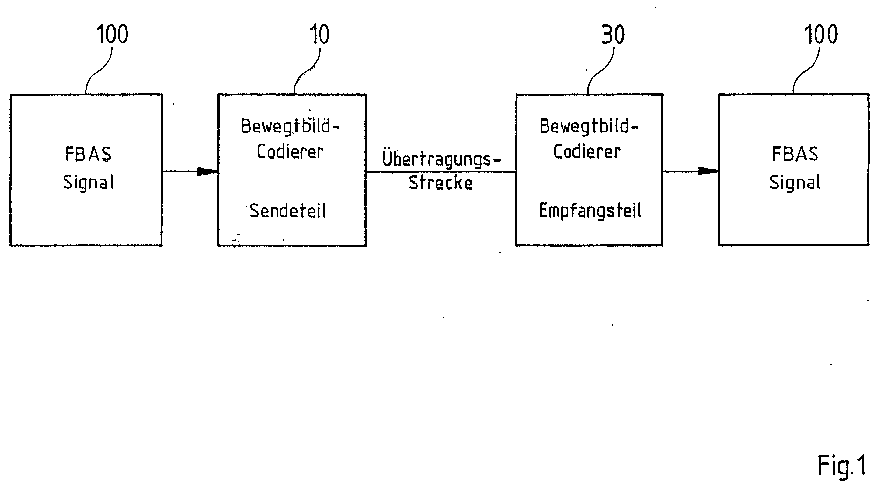

Die Fig. 1 zeigt die grundlegende Geräteanordnung zur digitalen Übertragung von Bewegtbildsignalen in FBAS-Form. Das FBAS-Signal 100 wird dem Sendeteil eines Bewegtbildkodierers 10 zugeführt. Dort wird das analoge Signal durch äquidistante und kohärente, zeilensynchrone Abtastung und durch anschließende Analog/Digitalwandlung in ein Digitalsignal der Bruttobitrate 135 MBit/s umgewandelt. Unter Zusatz von Stopfzeichen wird das Signal in einen Kanal etwas höherer Kanalkapazität eingefügt, der Teil eines für die Übertragung geeigneten Zeitmultiplexsystems ist. In dieser Form gelangt das Signal über die digitale Übertragungsstrecke, bestehend aus Sender, Übertragungsleitung und Empfänger, zum Empfangsteil des Bewegtbildkodierers 30. Dort werden die Stopfzeichen entfernt und durch Phasenregelung die ursprüngliche äquidistante Zeichenfolge hergestellt. Durch anschließende Digital/Analog-Wandlung wird aus der Zeichenfolge das ursprüngliche FBAS-Signal 100 rekonstruiert.

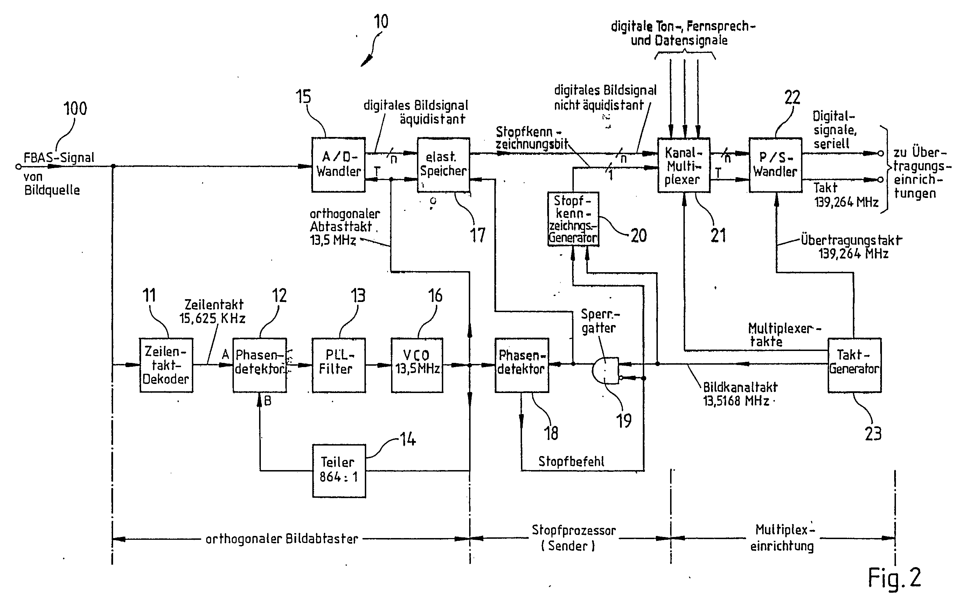

Die Fig. 2 zeigt das Blockschaltbild des Sendeteils des Bewegtbildkodierers 10, und zwar in der Ausführungsform der Selbstkennzeichnung der Stopfzeichen mit Hilfe eines Zusatzbits.

Das FBAS-Signal 100 gelangt zum Zeilentakt-Dekoder 11. Der Zeilentakt-Dekoder 11 leitet aus dem FBAS-Signal den 15,625 kHz-Zeilentakt des Bildsignales ab und legt ihn an den einen Eingang A des Phasendetektors 12. Am zweiten Eingang B des Phasendetektors 12 liegt der um den Faktor 864 heruntergeteilte Takt des spannungsgesteuerten 13,5 MHz-Oszillators 16 an. Durch Wirkung der aus Phasendetektor 12, PLL-Filter 13, Oszillator 16 und Teiler 14 gebildeten Phasenregelschleife ist der vom Oszillator 16 abgegebene 13,5 MHz-Takt synchron zum Zeilentakt des FBAS-Signales. Mit dem 13,5 MHz-Takt wird das FBAS-Signal abgetastet und durch den n-stufigen A/D-Wandler 15 (n = 9) in eine äquidistante PCM-Zeichenfolge umgewandelt. Sie ist synchron zum Zeilentakt und besitzt so die gewünschte Orthogonalität zum Bildsignal. Mit dem gleichen 13,5 MHz-Takt werden die aus n = 9 bit bestehenden Zeichen in paralleler Form in einen elastischen Speicher 17 geschrieben.

Das Auslesen der Zeichen aus dem elastischen Speicher 17 und die Weiterleitung zum Kanalmultiplexer 21 erfolgt mit Hilfe des im Taktgenerator 23 erzeugten 13,5168 MHz Bildkanaltaktes, der seinerseits synchron zum Übertragungstakt des der Übertragung zugrundeliegenden 139,264 MHz Zeitmultiplexsystems ist. Die Frequenz des Bildkanaltaktes ist geringfügig höher als die Frequenz der im elastischen Speicher zwischengespeicherten Zeichenfolge. Das Auslesen aus dem Speicher erfolgt daher etwas schneller als das Einschreiben. Erreicht der zeitliche Abstand eines Leseimpulses gegen- über dem Schreibimpuls des gleichen Zeichens eine vorgegebene untere Grenze, so erzeugt der Phasendetektor 18 einen Stopfbefehl. Dieser bewirkt zweierlei: Erstens wird durch Wirkung des Sperrgatters 19 ein einzelner Leseimpuls des Bildkanaltaktes unterdrückt, so daß das Auslesen aus dem elastischen Speicher für die Dauer eines Zeichens unterbleibt; einander zugeordnete Schreib- und Leseimpulse rücken dann wieder zeitlich auseinander. Zweitens wird vom Stopfzeichengenerator 20 an einer separaten Leitung für die Dauer einer Zeichentaktperiode ein Stopfkennzeichen bit k= "1" ausgegeben und zum Kanalmultiplexer 21 geleitet.

Im Kanalmultiplexer werden die 9 bit-Bildzeichen und das Zuisatzbit in 10 bit-Zeitschlitze des zur Verfügung stehenden 135, 168 MHz-Bildkanales eingefügt und zum Parallel/Serienwandler 22 geführt. In serieller Form werden die Bildsignale schließlich innerhalb des verwendeten 139,264 MHz-Zeitmultiplexsystems den nachfolgenden Übertragungseinrichtungen zugeführt.

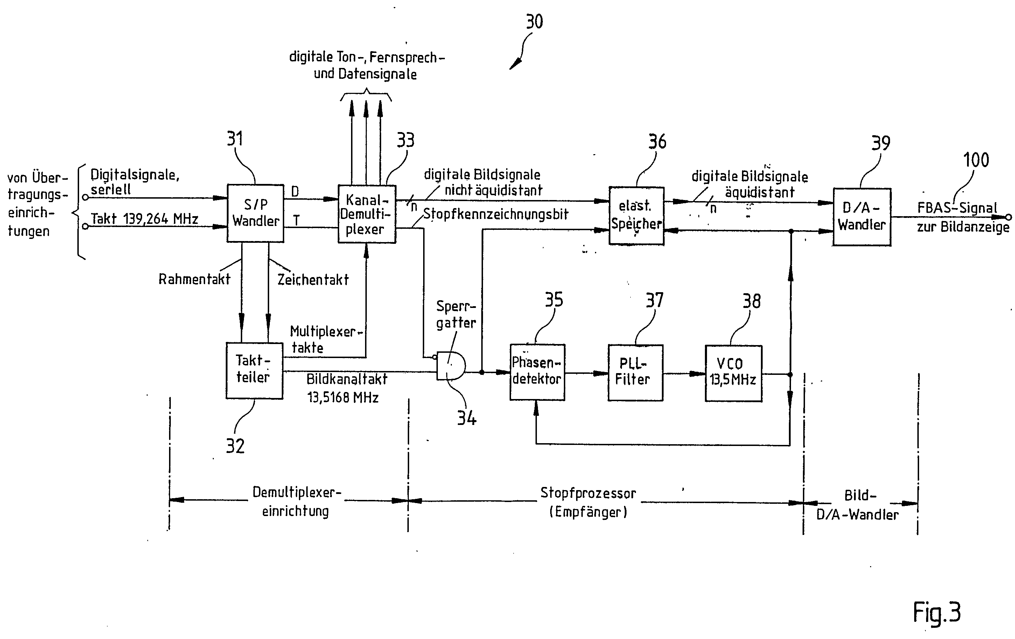

Die Fig. 3 zeigt das Blockschaltbild des Bewegtbildkodierer-Empfangsteiles 30 in der Ausführungsform der Selbstkennzeichnung der Stopfzeichen mit Hilfe eines Zusatzbits.

Die von den Übertragungseinrichtungen angelieferten seriellen 139,264 Mbit/s-Daten werden im Serien/Parallelwandler 31 in 10 bit-Zeichen umgewandelt und in dieser Form dem Kanal-Demultiplexer 33 zugeführt. Parallel dazu detektiert der S/P-Wandler 31 aus den angelieferten Daten den zugehörigen Zeichentakt sowie den Rahmentakt des verwendeten Zeitmultiplexrahmens. Zeichentakt und Rahmentakt werden im Taktteiler zur Erzeugung der Multiplextakte für den Kanal-Demultiplexer sowie zur Erzeugung des 135,168 MHz-Bildkanaltaktes verwendet. Synchron zum Bildkanaltext gibt der Kanal-Demultiplexer 33 die im Bildkanal enthaltenen 10 bit-Zeichen aus. Der 9 bit-Bildanteil gelangt zum elastischen Speicher 36. Das Bit Nr. 10, das Stopfkennzeichnungsbit, gelangt zum Sperrgatter 34.

Solange das Stopfkennzeichen-bit den Zustand "0" besitzt, läßt das Sperrgatter 34 den Bildkanaltext passieren und sorgt so dafür, daß die zugehörigen Bildzeichen in den elastischen Speicher 36 eingeschrieben werden. Hat das Stopfkennzeichnungsbit den Zustand "1", d.h. das anstehende Zeichen ist ein Stopfzeichen, so sperrt das Sperrgatter 34 den Bildkanaltakt für die Dauer eines Taktimpulses; das Einschreiben des Stopfzeichens in den elastischen Speicher 36 wird damit verhindert.

Das äquidistante Auslesen der 9 bit-Zeichen aus dem elastischen Speicher wird mit dem vom Oszillator 38 erzeugten 13,5 MHz-Takt vergenommen. Die Bildzeichen werden dem Digital/Analogwandler 39 zugeliefert und dort in das ursprüngliche FBAS-Signal 100 rückgewandelt. Der 13,5 MHz-Takt des Oszillators 38 entspricht frequenzmäßig exakt der Frequenz der in den elastischen Speicher 36 geschriebenen Bildzeichen. Dies wird durch Wirkung der aus Phasendetektor 35, PLL-Filter 37 und dem spannungsgesteuerten Oszillator 38 bestehenden Phasenregelschaltung erzwungen: Der vom Sperrgatter 34 an den Phasendetektor 35 angelieferte nicht äquidistante Bildkanaltakt wird durch die Phasenregelschaltung phasenmäßig geglättet; eine Frequenzänderung des Taktes findet nicht statt.

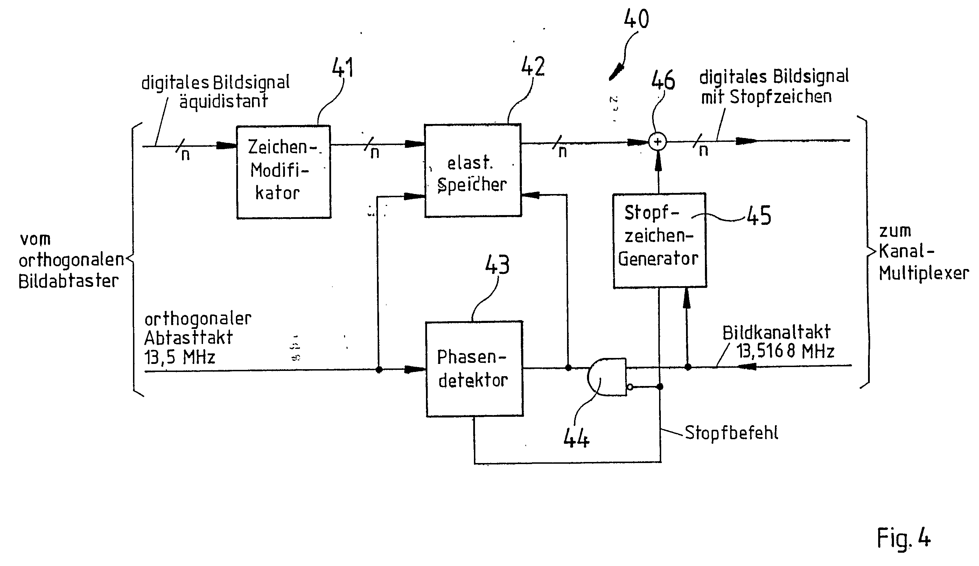

Die Fig. 4 zeigt den Stopfprozessorteil des Bewegtbildkodierers 40 in der Ausführungsform der Selbstkennzeichnung der Stopfzeichen durch ein spezielles Codewort. Die übrigen Teile des Bewegtbildkodierers entsprechen dem Aufbau nach Fig.2.

Bei dem vorliegenden Stopfprozessor tritt anstelle des Stopfzeichengenerators 20 nach Fig. 2, der auf einer einzelnen Leitung eine Zusatzbit-Kennzeichnung ausgibt, der Stopfzeichengenerator 45. Dieser gibt als Folge eines Stopfbefehls ein Stopfzeichen aus n = 9 bit über den Phasendetektor 43 und die Oderverknüpfung 46 zum Kanalmultiplexer. Das Stopfzeichen hat den Wert

$$0\ 0000\ 0000 \qquad (1)$$

Um zu verhindern, daß vom orthogonalen Bildabtaster Bildzeichen mit dem gleichen Wert in den elastischen Speicher 42 eingeschrieben und so Stopfzeichen vorgetäuscht werden, ist dem elastischen Speicher 42 ein Zeichen-Modifikator 41 vorgeschaltet. Wird vom Abtaster ein Bildzeichen (1) angeliefert, so ändert der Modifikator 41 das Zeichen in den nicht mit dem Stopfzeichen verwechselbaren Wert

$$0\ 0000\ 0001 \qquad (2)$$

Dabei ist das von "0" nach "1" veränderte bit das LSAB — Least Significant Bit — des Bildzeichens. Durch die Modifikation wird der Bildinhalt des übertragenen Bewegtbildes nicht beeinträchtigt, da das Zeichen (1) nur in den Bildlücken des FBAS-Signals entsteht.

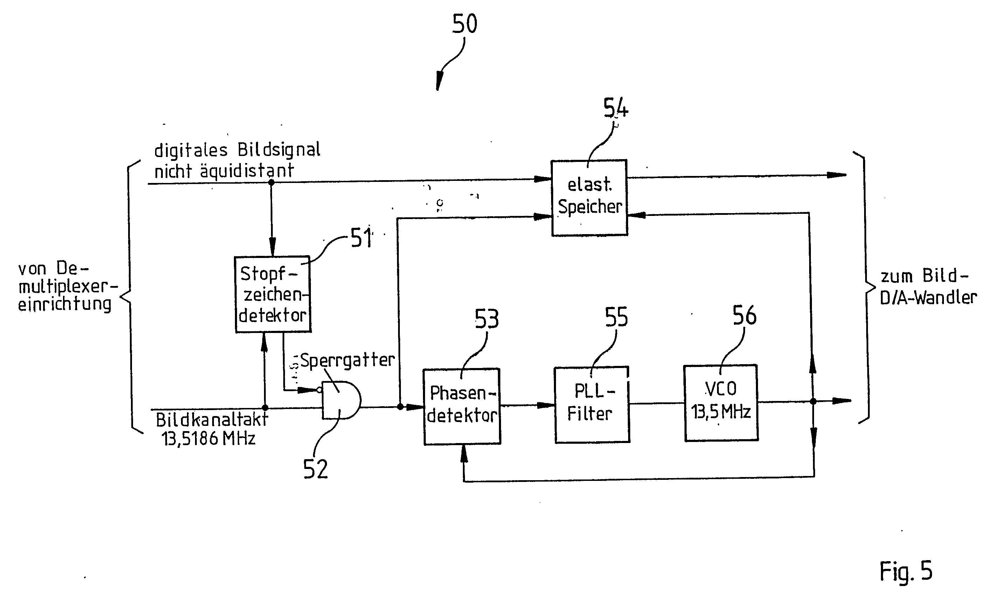

Die Fig. 5 zeigt den Stopfprozessorteil im Empfänger des Bewegtbild-kodierers 50 in der Ausführungsform der Selbstkennzeichnung der Stopfzeichen durch ein spezielles Codewort. Die übrigen Teile des Bewegtbildkodierers entsprechen dem Aufbau nach Fig. 3.

Der dargestellte Prozessorteil unterscheidet sich von dem Stopfprozessorteil in Fig. 3 durch den zusätzlichen Stopfzeichen-Detektor 51. Diesem Stopfzeichen-Detektor 51 wird die gesamte Folge der Bildzeichen von den Demultiplexeinrichtungen zugeführt. Bei Auftreten des Stopfzeichen-Codewortes

0 0000 0000

erzeugt der Detektor einen Sperrbefehl, der in der gleichen Weise wie in Fig. 3 das Sperrgatter 52 für die Dauer einer Taktperiode sperrt und so das Einschreiben des Stopfzeichens in den elastischen Speicher 54 unterbindet. Außerdem wird dadurch dafür gesorgt, daß durch Wirkung der aus Phasendetektor 53, PLL-Filter 55 und Oszillator 56 aufgebauten Phasenregelschaltung ein äquidistanter Lesetakt erzeugt wird, dessen Frequenz exakt den gleichen Wert hat wie die in den elastischen Speicher 54 eingeschriebene Bildzeichenfolge.

**Patentansprüche**

1. Verfahren zur Taktanpassung der äquidistanten digitalen Wertefolge eines Quellensignals an den Takt einer digitalen Übertragungsstrecke, wobei im Sendeteil Stopfzeichen eingefügt werden, die sich jeweils selbst durch ein Codewort kennzeichnen, und wobei im Empfangsteil die durch Codeworte gekennzeichnet Stopfzeichen derart entfent werden, daß die ursprünglich äquidistante Wertefolge wieder hergestellt ist, dadurch gekennzeichnet, daß die äquidistante, digitale Wertefolge durch orthogonale Abtastung eines FBAS Bewegtbildsignals gewonnen wird und daß das das Stopfzeichen kennzeichnende Codewort durch Modifikation der Bildabtastwerte der angebotenen Bildzeichen gewonnen wird.

2. Vorrichtung zur Durchführung des Verfahrens nach Anspruch 1, dadurch gekennzeichnet, daß ein Stopfprozessorteil (40) im Sender des Bewegtbildkodierers aus einem einem elastischen Speicher (42) vorgeschalteten Zeichen-Modifikator (41) zur Modifizierung des Codevorrats der Bildabtastwerte zwecks Gewinnung eines Codewortes zur Kennzeichnung der Stopfzeichen und aus einem durch einen Phasendetektor (43) gesteuerten Stopfzeichengenerator (45) zur Aussendung von Stopfzeichen-Codeworten über eine Oderverknüpfung (46) zu einem Kanal-Multiplexer gebildet ist.

3. Vorrichtung nach Anspruch 2, dadurch gekennzeichnet, daß das Stopfprozessorteil (50) im Empfänger des Bewegtbildkodierers aus einem Stopfzeichendetektor (51), der beim Auftreten eines Stopfzeichen-Codewortes das Einschreiben des Zeichens in einen elastischen Speicher (54) über ein Sperrgatter (52) verhindert, und aus einer, aus Phasendetektor (53), PLL-Filter (55) und Oszillator (56) bestehenden Phasenregelschaltung zur Erzeugung eines äquidistanten Lesetaktes aufgebaut ist, der frequenzmäßig exakt der in den elastischen Speicher (54) eingeschriebenen Bildzeichenfolge entspricht.

4. Vorrichtung zur Durchführung des Verfahrens nach Anspruch 1, dadurch gekennzeichnet, daß der Stopfprozessor des Empfängers des Bewegtbildkodierers (30) aufweist:

ein Sperrgatter (34) zur Verhinderung des Einschreibens des durch Stopfzeichenbit gekennzeichneten Stopfzeichens in den elastischen Speicher (36),

eine aus Phasendetektor (35), PLL-Filter (37) und Oszillator (38) bestehende Phasenregelschaltung zur Erzeugung eines 13,5 MHz-Taktes, der frequenzmäßig exakt der in den elastischen Speicher (36) geschriebenen Bildzeichenfolge entspricht.

5. Vorrichtung zur Durchführung des Verfahrens nach Anspruch 2, dadurch gekennzeichnet, daß ein Stopfprozessorteil (40) im Sender des Bewegtbildkodierers aus

einem durch den Phasendetektor (43) gesteuerten Stopfzeichengenerator (45) zur Aussendung von Stopfzeichen-Codeworten über die Oderverknüpfung (46) zum Kanal-Multiplexer und aus

einem dem elastischen Speicher (42) vorgeschalteten Zeichen-Modifikator (41) zur Erzeugung des Codevorrats der Bildabtastwerte zwecks Gewinnung eines Codewortes zur Kennzeichnung der Stopfzeichen.

6. Vorrichtung zur Durchführung des Verfahrens nach Anspruch 2, dadurch gekennzeichnet, daß das Stopfprozessorteil (50) im Empfänger des Bewegtbildkodierers aus

einem Stopfzeichendetektor (51), der bei Auftreten eines Stopfzeichen-Codewortes das Einschreiben des Zeichens in den elastischen Speicher (54) über das Sperrgatter (52) verhindert und aus

einer aus Phasendetektor (53), PLL-Filter (55) und Oszillator (56) bestehenden Phasenregelschaltung zur Erzeugung eines äquidistanten Lesetaktes, der frequenzmäßig exakt der in den elastischen Speicher (54) eingeschriebenen Bildzeichenfolge entspricht, aufgebaut ist.

**Revendications**

1. Méthode de codage d'images animées avec des signes de bourrage auto-caractérisés, dans la partie d'émission des signes de bourrage caractérisant eux-mêmes par un mot de code étant insérés, et dans la partie de réception les signes de bourrage caractérisés par des mots de code étant enlevés, de sorte que la séquence équidistante des valeurs originale soit restituée, caractérisée en ce que la séquence équidistante des valeurs est obtenue par balayage orthogonal d'un signal de suppression de couleur de l'image animée, et que le mot de code caractérisant le signe de bourrage est obtenu par modification des valeurs de balayage de l'image des signes d'image offerts.

2. Dispositif pour l'exécution de la méthode selon la revendication 1, caractérisé en ce qu'une partie de processeur de bourrage (40) dans l'émetteur du dispositif de codage d'images animées est formeze d'un modificateur (41) de signes prévu en amont d'une mémoire élastique (42) pour la modification du stock de code des valeurs de balayage de l'image en vue d'obtenir un mot de code pour la caractérisation des signes de bourrage et d'un générateur de signes de bourrage (45) commandé par un détecteur de phase (43) pour l'émission de mots de code des signes de bourrage par l'intermédiaire d'un élément OU (46) à un multiplexeur de voie.

3. Dispositif selon la revendication 2, caractérisé en ce que la partie de processeur de bourrage (50) dans le récepteur du dispositif de codage d'images animées est formée d'un détecteur de signes de bourrage (51) empêchant lors de l'apparition d'un mot de code des signes de bourrage l'écriture du signe dans une mémoire élastique (50) par l'intermédiaire d'une grille d'interdiction (52), et d'un circuit de régulation de phase composé d'un détecteur de phase (53), d'un filtre PLL (55) et d'un oscillateur (56) pour la génération d'un cycle équidistant de lecture correspondant exactement par rapport à sa fréquence à la séquence des signes d'image écrite dans la mémoire élastique (54).

4. Dispositif pour l'exécution de la méthode selon la revendication 1, caractérisé en ce que le processeur de bourrage du récepteur du dispositif de codage d'images animées (30) comporte:

une grille d'interdiction (434) pour empêcher l'écriture du signe de bourrage caractérisé par le bit de signe de bourrage dans la mémoire élastique (36),

un circuit de régulation de phase composé d'un détecteur de phase (35), d'un filtre PLL (37) et d'un oscillateur (38) pour la génération d'un cycle de 13,5 MHz correspondant exactement par rapport à sa fréquence à la séquence des signes d'image écrite dans la mémoire élastique (36).

5. Dispositif pour l'exécution de la méthode selon la revendication 2, caractérisé en ce qu'une partie de processeur de bourrage (40) dans l'émetteur du dispositif de codage d'images animées comporte:

un générateur de signes de bourrage (45) commandé par le détecteur de phase (43) pour l'émission de mots de code des signes de bourrage par l'intermédiaire de l'élément OU (46) au multiplexeur de voie, et

un modificateur de signes (45) prévu en amont de la mémoire élastique (41) pour la génération du stock de code en vue d'obtenir un mot de code pour la caractérisation des signes de bourrage.

6. Dispositif pour l'exécution de la méthode selon la revendication 2, caractérisé en ce que la partie de processeur de bourrage (50) dans le récepteur du dispositif de codage d'images animées comporte:

un détecteur de signes de bourrage (51), qui lors de l'apparition d'un mot de code d'une signe de bourrage empêche l'écriture du signe dans la mémoire élastique (54) par l'intermédiaire de la grille d'interdiction (52), et

un circuit de régulation de phase composé d'un détecteur de phase (53), d'un filtre PLL (55) et d'un oscillateur (56) pour la génération d'un cycle équidistant de lecture correspondant exactement par rapport à sa fréquence à la séquence des signes d'image écrite dans la mémoire élastique (54).

**Claims**

1. A method for moving pictures recognizing the stuffing characters by itself, wherein in the transmitting section of a digital transmission path stuffing characters are introduced each identified by a code word, and wherein in the receiving section the stuffing characters identified by code words are removed such that the originally equidistant sequence of values is restored, characterized by that the equidistant digital sequence of values is obtained by orthogonal scanning of a color-suppression moving picture signal, and that the code word identifying the stuffing character is obtained by modification of the picture scan values of the offered picture characters.

2. A coder for carrying out the method according to claim 1, characterized by that a stuffing processor section (40) in the transmitter of the coder for moving pictures is formed of a character modificator (41) arranged in front of an elastic memory (42) for modification of the code stock of the picture scan values for the purpose of obtaining a code word for identification of the stuffing characters, and of a stuffing character generator (45) controlled by a phase detector (43) for transmitting stuffing character code words over a logical OR operation member (46) to a channel multiplexer.

3. A coder according to claim 2, characterized by that the stuffing processor section (50) in the transmitter of the coder for moving pictures is formed of a stuffing character detector (51) inhibiting in the case of occurrence of a stuffing character code word writing-in of the character into an elastic memory (54) over a blocking gate (52), and of a phase regulation circuit comprising a phase detector (53), a PLL filter (55) and an oscillator (56) for generation of an equidistant read clock pulse corresponding with respect to frequency exactly to the sequence of picture characters written into the elastic memory (54).

4. A coder for carrying out the method according to claim 1, characterized by that the stuffing processor of the receiver of the coder for moving pictures comprises:

a blocking gate (34) for inhibiting writing-in of the stuffing character identified by the stuffing character bit into the elastic memory (36),

a phase regulation circuit comprising a phase detector (35), a PLL filter (37) and an oscillator (38) for generating a 13.5-MHz clock pulse corresponding with respect to frequency exactly to the sequence of picture characters written into the elastic memory (36).

5. A coder for carrying out the method according to claim 2, characterized by that a stuffing processor section (40) in the transmitter of the coder for moving pictures comprises:

a stuffing character generator (45) controlled by the phase detector (43) for transmitting stuffing character code words over the logical OR operation member (46) to the channel multiplexer, and

a character modificator (41) arranged in front of the elastic memory (42) for generating the code stock for the purpose of obtaining a code word for identification of the stuffing character.

6. A coder for carrying-out the method according to claim 2, characterized by that the stuffing processor section (50) in the receiver of the coder for moving pictures comprises:

a stuffing character detector inhibiting on occurrence of a stuffing character code word writing-in of the character into the elastic memory (54) over the blocking gate (52), and

a phase regulation circuit comprising a phase detector (53), a PLL filter (55) and an oscillator (56) for generating an equidistant read clock pulse corresponding with respect to frequency exactly to the sequence of picture characters written into the elastic memory (54).

| 100 | 10 | | 30 | 100 |
|---|---|---|---|---|
| FBAS Signal | Bewegtbild-Codierer\n\nSendeteil | Übertragungs-Strecke | Bewegtbild-Codierer\n\nEmpfangsteil | FBAS Signal |

Fig.1

EP 0 209 483 B1

EP 0 209 483 B1

Fig. 2

FBAS-Signal von Bildquelle · 100

11 — Zeilentakt-Dekoder
Zeilentakt 15,625 KHz

12 — Phasendetektor A / B

13 — PLL-Filter

14 — Teiler 864:1

16 — VCO 13,5 MHz

15 — A/D-Wandler
orthogonaler Abtasttakt 13,5 MHz
digitales Bildsignal äquidistant

10

17 — elast. Speicher

digitales Bildsignal nicht äquidistant

Stopfkennzeichnungsbit

18 — Phasendetektor · Stopfbefehl

19 — Sperrgatter

20 — Stopfkennzeichnungs-Generator

21 — Kanal-Multiplexer
digitale Ton-, Fernsprech- und Datensignale
Bildkanaltakt 13,5168 MHz
Multiplexertakte

22 — P/S-Wandler
Digitalsignale, seriell
Takt 139,264 MHz
zu Übertragungs-einrichtungen

Übertragungstakt 139,264 MHz

23 — Takt-Generator

Stopfprozessor (Sender)
Multiplex-einrichtung
orthogonaler Bildabtaster

2

Fig.3

von Übertragungseinrichtungen

Digitalsignale, seriell

Takt 139,264 MHz

digitale Ton-, Fernsprech-
und Datensignale

31 — S/P Wandler

D

T

Rahmentakt

Zeichentakt

32 — Takt-teiler

Multiplexer-takte

Bildkanaltakt
13,5168 MHz

33 — Kanal-Demulti-plexer

digitale Bildsignale
nicht äquidistant

Stopfkennzeichnungsbit

n

Sperr-gatter

34

35 — Phasen-detektor

37 — PLL-Filter

38 — VCO 13,5 MHz

36 — elast. Speicher

digitale Bildsignale
äquidistant

n

39 — D/A-Wandler

FBAS-Signal
zur Bildanzeige

100

30

Demultiplexer-einrichtung

Stopfprozessor
(Empfänger)

Bild-D/A-Wandler

Fig. 4

digitales Bildsignal
äquidistant

41 Zeichen-Modifikator

42 elast. Speicher

40

46

digitales Bildsignal
mit Stopfzeichen

45 Stopfzeichen-Generator

vom
orthogonalen
Bildabtaster

orthogonaler
Abtasttakt
13,5 MHz

43 Phasendetektor

44

zum
Kanal-Multiplexer

Bildkanaltakt
13,5168 MHz

Stopfbefehl

EP 0 209 483 B1

Fig. 5

von Demultiplexereinrichtung

digitales Bildsignal
nicht äquidistant

Bildkanaltakt
13,5186 MHz

Stopfzeichen-
detektor 51

Sperrgatter 52

Phasendetektor 53

PLL-
Filter 55

VCO
13,5 MHz 56

elast.
Speicher 54

50

zum Bild-
D/A-Wandler

EP 0 209 483 B1